**Europäisches Patentamt**

**European Patent Office**

**Office européen des brevets**

(19)

(11) Veröffentlichungsnummer: **0 000 783**
**B1**

(12) EUROPÄISCHE PATENTSCHRIFT

(45) Veröffentlichungstag der Patentschrift: **15.09.82**

(21) Anmeldenummer: **78100628.3**

(22) Anmeldetag: **09.08.78**

(51) Int. Cl.³: **C 08 L 23/12, C 08 K 3/34, C 08 K 7/00 // C08L23/08**

(54) **Polypropylen-Formmasse.**

(30) Priorität: **16.08.77 DE 2736792**

(43) Veröffentlichungstag der Anmeldung:
**21.02.79 Patentblatt 79/4**

(45) Bekanntmachung des Hinweises auf die Patenterteilung:
**15.09.82 Patentblatt 82/37**

(84) Benannte Vertragsstaaten:
**BE DE FR GB**

(56) Entgegenhaltungen:
DE - A - 2 033 803
DE - A - 2 441 147
DE - B - 1 197 226

Kunststoff-Taschenbuch, 20. Ausgabe,
Hansjürgen Saechtling, Carl Hanser Verlag,
München/Wien (1977), Seiten 239—242

Die Akte enthält technische Angaben, die nach dem
Eingang der Anmeldung eingereicht wurden und die
nicht in dieser Patentschrift enthalten sind.

(73) Patentinhaber: BASF Aktiengesellschaft
Carl-Bosch-Strasse 38
D-6700 Ludwigshafen (DE)

(72) Erfinder: Theysohn, Rainer, Dr.
Bruessler Ring 38
D-6700 Ludwigshafen (DE)
Erfinder: Zeitler, Gerhard, Dr.
Lessingstrasse 11
D-6711 Hessheim (DE)
Erfinder: Mueller-Tamm, Heinz, Dr.
Ottweiler Strasse 9
D-6700 Ludwigshafen (DE)
Erfinder: Merkel, Helmut, Dr.
Im Schlosskeller 11
D-6713 Freinsheim (DE)
Erfinder: Wurmb, Rolf, Dr.
Kastellweg 10
D-6900 Heidelberg (DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische
Patent Einspruch einlegen. Der Einspruch ist schriftlich einzureichen und zu begründen. Er gilt erst als eingelegt,
wenn die Einspruchsgebühr entrichtet worden ist (Art. 99(1) Europäisches Patentübereinkommen).

## 0 000 783

### Polypropylen-Formmasse

Polypropylen, insbesondere hochkristallines Polypropylen, ist ein als Formasse geschätzter Werkstoff, da es sich z.B. durch leichte Verarbeitbarkeit auszeichnet und zu Formteilen führt, die eine gute Wärmeformbeständigkeit und eine hohe Steifigkeit haben.

Ein bekannter Nachteil des Polypropylens ist indessen, daß seine Zähigkeit (etwa die Bruchzähigkeit nach DIN 53 443) sehr stark abnimmt mit Temperaturen, die unterhalb seines Glaspunkts — also ca. +4°C — liegen. Diese bedeutet für die Praxis, daß bei Temperaturen unterhalb von +4°C der Gebrauchswert von Formteilen aus Polypropylen erheblich eingeschränkt ist.

Es hat daher nicht an Versuchen gefehlt, die Kältezähigkeit von Polypropylen-Formassen zu verbessern.

Ein relativ gelungener — und inzwischen auch praktisch ausgeübter — Versuch besteht darin, in die Formassen zusätzlich zum Polypropylen untergeordnete Mengen bestimmter anderer linearer, thermoplastischer Polymerisate einzubringen. Zu diesen zusätzlichen thermoplastischen Polymerisaten zählen insbesondere auch Mischpolymerisate aus übergeordneten Mengen Äthylen und untergeordneten Mengen eines Alkylesters der Acryl- bzw. Methacrylsäure (vgl. AT—A—237 286).

Die guten Eigenschaften, die ein Zusatz der genannten thermoplastischen Mischpolymerisate in Polypropylen-Formmassen mit sich bringt, müssen indes wiederum mit einem gewissen Nachteil erkauft werden, nämlich einem deutlich spürbaren Abfall in den Steifigkeitswerten (etwa im Zug-E-Modul nach DIN 53 457).

Eine Aufgabenstellung zur vorliegenden Erfindung war es dementsprechend, Polypropylen-Formmassen der vorstehend geschilderten Gattung aufzuzeigen, die nicht nur eine gute Kältezähigkeit, sondern auch gute Steifigkeitswerte mit sich bringen.

Es wurde gefunden, daß diese Aufgabe gelöst werden kann mit Polypropylen-Formmassen, die aufgebaut sind aus (1) einem bestimmten Polypropylen, (2) einem bestimmten thermoplastischen Mischpolymerisat aus (2.1) Äthylen und (2.2) n-Butylacrylat sowie (3) einem bestimmten anorganischen, plättchenförmigen Füllstoff.

Gegenstand der vorliegenden Erfindung ist dementsprechend eine Polypropylen-Formasse

(1) 60 bis 85 Volumenteilen eines einen kristallinen Anteil von über 90, vorzugsweise über 95, % sowie einen Schmelzindex (2,16 kg, 230°C) von 0,5 bis 5 aufwesenden Polypropylens,

(2) 15 bis 35 Volumenteilen eines einen Schmelzindex (2,16 kg, 230°C) von 0,5 bis 5, einen Zug-E-Modul (nach DIN 53 457) von weniger als 1 000 $Nmm^{-2}$ sowie eine Glastemperatur von weniger als −20°C aufweisenden Mischpolymerisats, das

(2.1) 100 Gewichtsteile Äthylen und

(2.2) 30 bis 55 Gewichtsteile des Esters der Acrylsäure mit n-Butanol

einpolymerisiert enthält, sowie

(3) 2 bis 8 Volumenteile eines plättchenförmigen Talkums, der ein Seitenverhältnis (Plättchendicke : Plättchendurchmesser) von 1 : 10 bis 1 : 300, sowie eine Plättchendicke von 0,01 bis 2 $\mu$m hat,

wobei die Summe der Volumenteile unter (1), (2) und (3) 100 Volumenteile beträgt.

Zur stofflichen Seite der neuen Formmassen ist im einzelnen das folgende zu sagen:

(1) Polypropylene mit den geforderten Kenndaten sind aus der Polymerchemie als solche bekannt und im Hanel erhältlich, so daß sich nähere Ausführnngen erübrigen.

(2) Für die thermoplastischen — also im unvernetzten Zustand vorliegenden — Mischpolymerisate aus Äthylen, und einer Ester-Komponente gilt sinngemäß das zum Polypropylen (1) Gesagte. Es ist jedoch ergänzend festzustellen, daß die Mischpolymerisate, die aus 100 Gewichtsteilen Äthylen und 30 bis 55 Gewichtsteilen der Ester-Komponente aufgebaut sind, zu etwa 65 bis 77 Gewichtsprozent aus einpolymerisiertem Äthylen und — auf 100% ergänzend —zu etwa 35 bis 23% Gewichtsprozent aus einpolymerisiertem Ester bestehen.

(3) Der anorganische plättchenförmige Füllstoff mit den geforderten Kenndaten ist ein entsprechend dimensioniertes Talkum. Der Füllstoff kann — wie einschlägig üblich — vorbehandelt sein, z.B. zur Verbesserung der Haftfestigkeit und Verträglichkeit gegenüber der Polymermatrix. Als Mittel zu einer solchen Vorbehandlung seien — beispielhaft — genannt Stearate und Polymerdispersionen.

(4) Falls gewünscht, können die erfindungsgemäßen Formassen zusätzlich zu den Komponenten (1), (2) und (3) einschlägig übliche Hilfs- bzw. Zusatzstoffe in den üblichen Mengen enthalten, z.B. Verarbeitungshilfsmittel, Stabilisatoren, farbgebende Stoffe, flammhemmende Stoffe etc.

Das Herstellen der neuen Formmassen aus ihren Komponenten kann unmittelbar aus diesen erfolgen oder — wie in vergleichbaren Fällen einschlägig vielfach geübt — über ein Konzentrat des Füllstoffs (3) in einer der Polymerisationskomponenten (1) oder (2). Es versteht sich von selbst, daß man für eine möglichst homogene Verteilung der Komponenten untereinander Sorge trägt; — d.h. daß man zweckmäßigerweise über den schmelzflüssigen Zustand des Polypropylens und unter intensiven Mischbedingungen die anderen Komponenten zuarbeitet, etwa in einem Zweischneckenkneter.

Die erfindungsgemäßen Formmassen können auf den zur Verarbeitung von Polypropylen-Formmassen gängigen Verarbeitungsmaschinen zu den für Polypropylen bekannten und üblichen Formteilen verarbeitet werden, z.B. zu Folien, Profilen, Platten, Hohlkörpern und Karosserieteilen.

### Beispiel 1

Es wird ausgangen von einem Gemisch aus

(1) 70 Volumenteilen eines einen kristallinen Anteil von 95% sowie einen Schmelzindex (2,16 kg, 230°C) von 2,0 aufweisenden grießförmigen Polypropylens,

(2) 25 volumenteilen eines einen Schmelzindex (2,16 kg, (230°C) von 1,5 einen Zug-E-Modul (nach DIN 53 457) von 30 Nmm$^{-2}$ sowie eine Glastemperatur von <−100°C aufweisenden grießförmigen Mischpolymerisats, das

(2.1) 100 Gewichtsteile Äthylen sowie

(2.2) 30 Gewichtsteile des Esters der Acrylsäure mit n-Butanol einpolymerisiert enthält, sowie

(3) 5 Volumenteilen eines plättchenförmigen Talkums, das ein Seitenverhältnis (Plättchendicke : Plättchendurchmesser) von 1 : 10 bis 1 : 200, sowie eine Plättchendicke von 0,02 bis 1 μm hat.

Dieses Gemisch wird in einem Zweischneckenkneter bei einer Temperatur von etwa 220°C homogenisiert, in Strängen ausgepreßt, abgekühlt und granuliert.

Aus dem so erhaltenen Granulat werden bei Massetemperaturen von 220°C Prüfkörper spritzgegossen, und zwar für die Bestimmung des Zug-E-Moduls nach DIN 53 457, als Maß für die Steifigkeit und der Bruchzähigkeit nach DIN 53 443 B (25 mm Kalottenradius) als Maß für die Zähigkeit.

Die an den Prüfkörpern ermittelten Werte sind in der unten stehenden Tabelle angegeben.

### Vergleichzversuch 1

Das Beispiel wird wiederholt mit der einzigen Ausnahme, daß das Talkum in Wegfall kommt. Die in den entsprechenden Prüfkörpern ermittelten Werte finden sich ebenfalls in der Tabelle.

### Vergleichsversuch 2

Das Beispiel 1 wird wiederholt mit den beiden einzigen Ausnahmen, daß sowohl das Talkum als auch das Mischpolymerisat in Wegfall kommen.

Die an den dabei erhaltenen Prüfkörpern gefundenen Werte sind wiederum in der Tabelle angegeben.

### TABELLE

|  | Zug−E−Modul [Nmm$^{-2}$] | | | Bruchzähigkeit [Nm] | | |
|---|---|---|---|---|---|---|
|  | +23°C | ±0°C | -20°C | +23°C | ±0°C | -20°C |
| Beispiel | 1500 | 2850 | 3500 | 11,4 | 12,2 | 13,1 |
| Vergleichs-versuch 1 | 950 | 1850 | 2100 | 12,6 | 12,7 | 13,5 |
| Vergleichs-versuch 2 | 1490 | 2900 | 3400 | 10,7 | 0,27 | 0,14 |

Wie die Tabelle zeigt, ist die Steifigkeit bei den erfindungsgemäßen Formmassen etwa gleichgroß wie beim Polypropylen; die Kältezähigkeit ist bei den erfindungsgemäßen Formmassen sehr viel besser als beim Polypropylen. Sehr überraschend ist der positive Befund, daß die Absolutwerte der Zähigkeit bei den erfindungsgemäßen Formmassen so hoch liegen, da ein Zusatz von plättchenförmigem Talkum in vergleichbaren anderen Polypropylen-Formmassen deren Zähigkeitswerte bekanntlich in erheblichem Maße drückt.

### Patentanspruch

1. Polypropylen-Formasse aus

(1) 60 bis 85 Volumenteilen eines einen kristallinen Anteil von über 90% sowie einen Schmelzindex (2,16 kg, 230°C) von 0,5 bis 5 aufweisenden Polypropylens,

(2) 15 bis 35 Volumenteilen eines einen Schmelzindex (2,16 kg, 230°C) von 0,5 bis 5, einen Zug-E-Modul (nach DIN 53 457) von weniger als 1 000 Nmm$^{-2}$ sowie eine Glastemperatur von weniger als —20°C aufweisenden Mischpolymerisats, das

(2.1) 100 Gewichtsteile Äthylen und

(2.2) 30 bis 55 Gewichtsteile des Esters der Acrylsäure mit n-Butanol

einpolymerisiert enthält, sowie

(3) 2 bis 8 Volumenteile eines plättchenförmigen Talkums, der ein Seitenverhältnis (Plättchendicke : Plättchendurchmesser) von 1 : 10 bis 1 : 300, sowie eine Plättchendicke von 0,01 bis 2 μm hat,

wobei die Summe der Volumenteile unter (1), (2) und (3) 100 Volumenteile beträgt.


**Revendication**

1. Matière à mouler à base de polypropylène, composé de:

(1) 60 à 85 parties en volume d'un polypropylène avec une fraction cristalline supérieure à 90% et d'un indice de fusion (2,16 kg; 230°C) de 0,5 à 5;

(2) 15 à 35 parties en volume d'un copolymérisat de

(2.1) 100 parties en poids d'éthylène et

(2.2) 30 à 55 parties en poids de l'ester de l'acide acrylique et du n-butanol, possédant un indice de fusion (2,16 kg; 230°C) de 0,5 à 5, un module d'élastiscité à la traction (selon DIN 53 457) inférieur à 1000 Nmm² et une température de transition vitreuse inférieure à —20°C;

(3) 2 à 8 parties en volume d'un talc lamellaire, dont les lamelles possèdent une épaisseur comprise entre 0,01 et 2 μm et un rapport de la hauteur (épaisseur) à la largeur (diamètre) compris entre 1 : 10 et 1 : 300,

la somme des parties en volume de (1), de (2) et de (3) étant égale à 100.


**Claim**

1. A polypropylene moulding composition consisting of

(1) 60 to 85 parts by volume of a polypropylene having a crystalline content of more than 90% and a melt index (2.16 kg, 230°C) of from 0.5 to 5,

(2) 15 to 35 parts by volume of a copolymer which has a melt index (2.16 kg, 230°C) of from 0.5 to 5, an elastic modulus (tensile) (according to DIN 53,457) of less than 1000 Nmm$^{-2}$ and a glass transition temperature of less than —20°C, and which contains, as copolymerized units,

(2.1) 100 parts by weight of ethylene, and

(2.2) 30 to 55 parts by weight of the ester of acrylic acid with n-butanol, and

(3) 2 to 8 parts by volume of a platelet-shaped talc, the ratio of the sides of which (platelet thickness to platelet diameter) is from 1 : 10 to 1 : 300, and which has a platelet thickness of from 0.01 to 2 μm,

the sum of the parts by volume under (1), (2) and (3) being 100.